# EUROPÄISCHE PATENTSCHRIFT

(11) **EP 3 602 098 B1**
(45) Veröffentlichungstag und Bekanntmachung des Hinweises auf die Patenterteilung: **28.04.2021**
(21) Anmeldenummer: 17808061.0
(22) Anmeldetag: 29.11.2017
(51) Int. Cl.: G01H 3/12, G01S 5/18

(54) **SCHALLQUELLEN-VISUALISIERUNGSSYSTEM**
SOUND SOURCE VISUALISATION SYSTEM
SYSTÈME DE VISUALISATION DE SOURCES SONORES

(43) Veröffentlichungstag der Anmeldung: 05.02.2020
(73) Patentinhaber: CAE SOFTWARE UND SYSTEMS GMBH, 33334 Gütersloh (DE)
(72) Erfinder: ZURMÜHLEN, Nico, 33332 Gütersloh (DE); KOHN, Kai-Uwe, 33378 Rheda-Wiedenbrück (DE)
(74) Vertreter: Schober, Mirko
(86) Internationale Anmeldenummer: PCT/EP2017/080796
(87) Internationale Veröffentlichungsnummer: WO 2019/105541

(56) Entgegenhaltungen:
- EP-A1- 3 012 650
- EP-A1- 3 343 242
- DE-A1-102015 207 134
- FR-A1- 3 018 023
- US-A1- 2011 252 888

## Beschreibung

### TECHNISCHES GEBIET

Die Erfindung betrifft ein Schallquellen-Visualisierungssystem gemäß dem Oberbegriff von Anspruch 1.

### STAND DER TECHNIK

Während der Erfolg einer Ortsbestimmung hörbarer Schallquellen bereits stark von deren jeweiliger Frequenz abhängig ist, stellt ein Schallfeld aus überlagerten Schallwellen eine für das menschliche Ohr diesbezüglich zumeist unlösbare Aufgabe dar. Um insbesondere komplexe akustische Immissionen dennoch selektiv analysieren und/oder lokalisieren zu können, werden daher eigens hierfür entwickelte Systeme wie etwa akustische Kameras eingesetzt. Mit deren Hilfe ist es möglich, Schallwellen zu erfassen und die hierzu gemessenen und/oder errechneten Ergebnisse optisch umzusetzen. So kann deren Visualisierung beispielsweise in Falschfarbenbildern erfolgen, die dann mit einer realen Umgebungsaufnahme entweder als Standbild oder in Echtzeit überlagert werden.

Aus EP 3 001 162 A1 ist ein Schallquellen-Visualisierungssystem bekannt, welches eine zum Empfang von Schallwellen eingerichtete Empfangsanordnung sowie eine zur Erfassung eines Umgebungsbereichs ausgebildete Erfassungseinrichtung umfasst. Die Empfangsanordnung besitzt eine Vielzahl an in Form eines Arrays angeordneten Mikrophonen, während die Erfassungseinrichtung zumindest eine Kamera aufweist. Um die so empfang- und erfassbaren akustischen sowie optischen Daten zu verarbeiten und miteinander in Beziehung zu bringen, sind die Empfangsanordnung und die Erfassungseinrichtung mit einem geeigneten Datenverarbeitungsmittel signalübertragend gekoppelt. Auf diese Weise ist eine innerhalb eines erfassten Umgebungsbereichs empfangene Schallwelle dahingehend auswertbar, dass das zugehörige Ergebnis in Form wenigstens einer Information durch ein Anzeigemittel visualisierbar ist. Bei dem Anzeigemittel kann es sich beispielsweise um eine rein darstellende oder beispielsweise mit einer berührungsempfindlichen Oberfläche ausgestattete Anzeige handeln.

Üblicherweise werden derartige Systeme in einer Testumgebung fest installiert oder für individuelle Einsätze am jeweiligen Messort aufgebaut. Der aus der EP 3 001 162 A1 hervorgehende Aufbau des Schallquellen-Visualisierungssystems sieht eine zentrale Platine vor, an deren Frontseite das Mikrophon-Array der Empfangsanordnung gemeinsam mit der zentral darin gelegenen Kamera der Erfassungseinrichtung angeordnet sind. Überdies dient die Platine als Träger für das Datenverarbeitungsmittel sowie das Anzeigemittel, welche hierzu an der gegenüberliegenden Rückseite der Platine befestigt sind

DE102015207134 offenbart ein Vibrationsüberwachungssystem mit Vibrationssensoren auf einer zu überwachende Maschine. Die Vibrationsdaten werden zu dem Datenverarbeitungsmittel einer Datenbrille gesendet, verarbeitet und von dem Anzeigemittel der Brille angezeigt.

Diese Ausgestaltung ermöglicht eine kompakte Bauweise und erhöht die Mobilität des Schallquellen-Visualisierungssystems. Für dessen genaue und mitunter Bewegungen verfolgende Positionierung ist es allerdings notwendig, stets das gesamte System entsprechend auszurichten. Dynamische Messungen oder gar schnelle Wechsel in der Orientierung sind insofern nur bedingt möglich, wobei die Visualisierung der Ergebnisse stets an die jeweils aktuelle Situation gebunden ist.

### DIE ERFINDUNG

Der vorliegenden Erfindung liegt daher die Aufgabe zugrunde, ein gattungsgemäßes Schallquellen-Visualisierungssystem dahingehend weiterzuentwickeln, dass dieses einen insgesamt dynamischeren Einsatz erlaubt und dabei eine an menschliche Bewegungsabläufe angepasste Visualisierung der jeweiligen Information ermöglicht.

Die Lösung dieser Aufgabe besteht nach der Erfindung in einem Schallquellen-Visualisierungssystem mit den Merkmalen von Anspruch 1. Vorteilhafte Ausgestaltungen sind Gegenstand der abhängigen Ansprüche.

Die Erfindung geht dabei von dem grundlegenden Gedanken aus, das Schallquellen-Visualisierungssystem nicht als eigenständige und von der das System bedienenden Person getrennte Einheit aufzufassen, sondern dieses zumindest teilweise mit der Person und deren Bewegungen zu verbinden. Hierzu wird vorgeschlagen, die zur Umgebungsbereichserfassung ausgebildete Erfassungseinrichtung des Schallquellen-Visualisierungssystems in oder an einer Tragvorrichtung anzuordnen, welche mit einem Kopfbereich der Person koppelbar ist. Alternativ hierzu kann die Erfassungseinrichtung selbstverständlich auch direkt als eine solche Tragvorrichtung ausgebildet sein.

Der sich hieraus ergebende Vorteil ist in einem weit flexibleren und überaus dynamischen Einsatz des erfindungsgemäßen Schallquellen-Visualisierungssystems zu sehen. Durch die einfache Lageveränderung der nunmehr an die Kopfbewegungen der jeweiligen Person gekoppelten Erfassungseinrichtung entfällt die bisweilen mitunter aufwendige Veränderung der Orientierung des gesamten Systems. Neben der hierdurch deutlich einfacheren Verfolgung etwaiger Bewegungen eines Objektes besteht so auch die Möglichkeit einer einfachen Änderung der Distanz und/oder der Ausrichtung, insbesondere während der Erfassung.

Gemäß einer besonders bevorzugten Weiterbildung des grundsätzlichen Erfindungsgedankens kann das Anzeigemittel dabei derart an der Tragvorrichtung angeordnet sein, dass dieses selbst und/oder wenigstens dessen Visualisierung zumindest teilweise im Sichtbereich der jeweiligen, die Tragvorrichtung in bestimmungsgemäßer Weise nutzenden Person gelegen ist. So kann die jeweilige Information entweder dem beispielsweise als Anzeige ausgebildeten oder eine solche enthaltenen Anzeigemittel direkt oder in Form einer indirekten Abbildung durch das Anzeigemittel entnommen werden. Insbesondere die Möglichkeit einer Abbildung schließt die Darstellung über eine entsprechend reflektierende Fläche oder eine direkte Beaufschlagung der Netzhaut mit ein. Durch die Anordnung des Anzeigemittels in oder an der Tragvorrichtung erhält jene, die Erfassungseinrichtung mit sich führende Person ein natürliches Feedback in Bezug auf die von ihrer Kopfhaltung und/oder Entfernung zum Objekt abhängige Darstellung des erfassten Umgebungsbereichs wie auch der jeweiligen Informationen.

In dieser Erfindung ist die Tragvorrichtung zumindest bereichsweise transparent oder blickdicht ausgebildet. Dies meint, dass die Tragvorrichtung ein zumindest bereichsweises und/oder teilweises Hindurchblicken zulassen kann, so dass eine die Tragvorrichtung nutzende Person einen Blick auf die tatsächliche Umgebung erhält oder nicht.

Bei einer zumindest bereichs- und/oder teilweise transparenten Ausgestaltung der Tragvorrichtung wird eine Einrichtung des Anzeigemittels als besonders vorteilhaft angesehen, die es erlaubt, den Ort einer Schallquelle und/oder die Information über die empfangene Schallwelle als Einblendung in den zumindest teilweise durch die Tragvorrichtung hindurch frei sichtbaren Umgebungsbereich zu visualisieren. Dies meint eine Überlagerung aus realer Umgebung und virtueller Darstellung. Letztere kann dabei beispielsweise von der Einblendung lesbarer Informationen bis hin zu graphischen und bildhaften Ausgestaltungen reichen, welche die reale Umgebung ergänzen.

Hinsichtlich einer demgegenüber zumindest bereichs- und/oder teilweise blickdichten Ausgestaltung der Tragvorrichtung wird eine Einrichtung des Anzeigemittels als besonders vorteilhaft angesehen, die es erlaubt, den von der Erfassungseinrichtung erfassten Umgebungsbereich zumindest teilweise zusammen mit der darin eingeblendeten Information über die empfangene Schallwelle zu visualisieren. Auf diese Weise kann die reale Umgebung beispielweise als natürliche Abbildung wiedergegeben oder in geeigneter Form in ihren Details verringert sein. So kann die zunächst von der Erfassungseinrichtung erfasste Umgebung beispielsweise in Echtzeit auf relevante Details wie etwa Umrisse reduziert sein und über das Anzeigemittel wiedergegeben werden.

Neben der so möglichen Konzentration auf das Wesentliche ist das Schallquellen-Visualisierungssystem dann auch in einer Umgebung einsetzbar, die beispielsweise eine für das menschliche Auge optische Erfassung nicht zulässt und/oder eine mögliche Schädigung bewirken könnte. Damit ist etwa ein Einsatz in dunkler Umgebung möglich, indem der jeweilige Umgebungsbereich beispielsweise mittels Restlichtverstärkung und/oder auf Basis von Thermografie über das Anzeigemittel wiedergegeben und mit den jeweiligen Informationen versehen werden kann.

Selbstverständlich ist auch eine Ausgestaltung denkbar, welche die beiden zuvor alternativ genannten Ausgestaltungen in sich vereint und beispielsweise über eine Umschaltung bei Bedarf abwechselnd nutzbar macht.

Grundsätzlich ist vorgesehen, dass die jeweilige Information oder die jeweiligen Informationen über die empfangene Schallwelle/n in der aktuellen Situation live oder auf Basis einer bereits zurückliegenden Erfassung bzw. eines bereits zurückliegenden Empfangs zur Verfügung gestellt werden können. Damit kann die Information auf Basis einer Echtzeitermittlung oder einer vorherigen Ablage entsprechender Daten und/oder bereits ausgewerteter Ergebnisse in einem Speicher visualisierbar sein. Insbesondere in Bezug auf komplexe Vorgänge können so zunächst Daten durch den Empfang von Schallwellen und/oder der Erfassung eines Umgebungsbereichs gesammelt und verarbeitet werden, die anschließend zur Verfügung stehen. Diese können so aufbereitet sein, dass ein Objekt quasi im Nachgang begehbar und/oder untersuchbar ist, wobei die jeweilige Information dann in Abhängigkeit der Lage und Ausrichtung der Tragvorrichtung zur Verfügung stehen. Mit anderen Worten kann so ein Objekt detailliert untersucht werden, wobei jene, die Tragvorrichtung nutzende Person sich diesem in der jeweils vorteilhaften Weise nähert und über ihre Kopfausrichtung gezielt solche Bereiche fokussiert, die relevant erscheinen.

Auf diese Weise können auch Daten eines Objektes mit Verwendung finden, die beispielsweise einen Blick in dieses hinein zulassen und mit Informationen über empfangene Schallwellen kombinieren.

Damit ist eine Ausgestaltung des erfindungsgemäßen Schallquellen-Visualisierungssystems möglich, die es erlaubt, dass die Information über die empfangene Schallwelle in einer Überlagerung mit einer zuvor in einem Speicher aufgezeichneten oder mit einer in Echtzeit ablaufenden Wiedergabe eines Umgebungsbereichs visualisierbar ist. Dabei kann es sich um tatsächliche Aufnahmen oder beispielsweise reduzierte Darstellungen handeln.

Weiterhin ist so eine Ausgestaltung möglich, nach der auf Basis einer Erfassung durch die Erfassungseinrichtung etwaige 3D-Daten eines Umgebungsbereichs ermittelbar sind, wobei die Information über die empfangene Schallwelle dann als an die 3D-Daten angepasste, insbesondere räumliche, Darstellung visualisierbar ist.

Je nach Ausgestaltung des erfindungsgemäßen Schallquellen-Visualisierungssystems ist es möglich, den jeweils erfassten Umgebungsbereich und/oder die jeweilige Information über die empfangene Schallwelle als 2D- oder 3D-Darstellung zu visualisieren. Folglich können insbesondere bildhafte Darstellungen der Information so an Details eines Umgebungsbereiches angepasst sein, dass diese sich für den jeweiligen Betrachter beispielsweise um die Form eines Objektes herum legen bzw. auf dieses auflegen. Auf diese Weise können beispielsweise eine Schallquelle und/oder deren Reflexion/en an Teilen des Objektes markiert sein.

Alternativ oder ergänzend zu einer beispielsweise graphischen bzw. bildhaften Darstellung der Quelle einer Schallwelle oder deren Reflexion/en wird eine weitergehende Ausgestaltung als besonders vorteilhaft angesehen, die es ermöglicht, dass die jeweilige Information wenigstens eines der nachfolgenden Analyseergebnisse in Bezug auf mindestens eine empfangene Schallwelle enthält:
- Schalldruck,
- Schallschnelle,
- Schallintensität,
- Schallpegel,
- Frequenz,
- Lage innerhalb des erfassten Umgebungsbereichs.

Die jeweilige akustische Größe kann dabei in lesbarer und/ oder abstrakter Form vorliegen. Denkbar hierzu ist eine Visualisierung im Klartext, wie etwa über Worte und/oder Zahlenwerte. Zusätzliche oder alternative Angaben können eine zu interpretierende Symbolik aufweisen, beispielsweise in Form von Farbwerten und/oder Punkten und/oder Rasterungen und/oder Schraffuren und/oder dergleichen. Insbesondere über eine Visualisierung mittels Vektoren können etwaige Richtungen und/oder über deren Länge und/oder Dicke und/oder Farbe darstellbare Größenordnungen des jeweiligen Analyseergebnisses dargestellt sein.

Eine weitergehende Entwicklung der Erfindung sieht vor, dass das Schallquellen-Visualisierungssystem über die Erfassungseinrichtung hinaus wenigstens eine Kamera und/oder einen Sensor umfassen können/kann. Die Kamera und/oder der Sensor können/kann dann beispielsweise gezielt auf einen Bereich ausgerichtet sein, um für diesen wenigstens eine akustische Größe zu erfassen. Vorteilhafterweise ist eine Anordnung in oder an der Tragvorrichtung vorgesehen, so dass eine zur Erfassungseinrichtung parallele Änderung in der jeweiligen Ausrichtung der Kamera und/oder des Sensors erfolgen kann.

Gemäß einer bevorzugten Weiterbildung der Erfindung kann das Schallquellen-Visualisierungssystem wenigstens einen Speicher und/oder mindestens ein Datenverarbeitungsmittel umfassen. Bei dem Datenverarbeitungsmittel kann es sich um das bereits zuvor erwähnte Datenverarbeitungsmittel oder ein zusätzliches Datenverarbeitungsmittel handeln. In vorteilhafter Weise können/kann der Speicher und/oder das Datenverarbeitungsmittel in oder an der Tragvorrichtung angeordnet sein. Hierdurch ergibt sich ein überaus flexibles Gesamtsystem, welches nahezu vollständig durch jene, die Tragvorrichtung nutzende Person temporär mitgeführt werden kann. So kann die Erfassungsanordnung beispielsweise an einem zuvor festgelegten Ort stationiert sein, während das restliche System stets den möglichen Bewegungen der Person folgt.

Das Datenverarbeitungsmittel dient bevorzugt der Analyse einer durch die Empfangsanordnung empfangenen Schallwelle. Dies insbesondere auf Basis und/oder in Kenntnis des durch die Erfassungseinrichtung erfassten Umgebungsbereichs bzw. der jeweiligen 3D-Daten hierzu. Selbstverständlich können die Analyseergebnisse bereits zuvor erstellt sein, die dann im Nachgang in Abhängigkeit der Ausrichtung der Erfassungseinrichtung und damit an den jeweiligen Umgebungsbereich angepasst über das Anzeigemittel visualisierbar sind. Auch können die 3D-Daten des Umgebungsbereichs zuvor erfasst sein, so dass tatsächlich eine nachträgliche und/oder an einem entfernten Ort stattfindende Untersuchung des jeweiligen Objekts möglich ist, bei der das entsprechende Objekt mitsamt der jeweiligen Information über eine rein virtuelle Darstellung der Person gegenüber visualisierbar sind.

Insbesondere der Speicher kann in vorteilhafter Weise dazu dienen, mindestens ein Analyseergebnis und/oder mindestens einen Teil des erfassten Umgebungsbereichs bzw. die entsprechenden 3D-Daten zu speichern. Auf diese Weise können diese zu jeder Zeit abgerufen und bei Bedarf verarbeitet und/oder manipuliert werden, insbesondere bevor oder zeitgleich zu ihrer Visualisierung.

Angesichts einer möglichen, insbesondere baulichen, Zusammenlegung der einzelnen Teile des erfindungsgemäßen Schallquellen-Visualisierungssystems können beispielsweise das Datenverarbeitungsmittel und die Empfangsanordnung als eine Einheit ausgeführt sein. Hierdurch reduzieren sich der notwendige Platzbedarf und/oder der Aufwand für den Auf- sowie Abbau des Systems. Überdies kann dabei das Datenverarbeitungsmittel selbst oder ein dieses enthaltendes Gehäuse als Basis für die Empfangsanordnung dienen. Hierzu kann beispielsweise wenigstens ein oder direkt mehrere Mittel zum Empfang von Schallwellen in und/oder an und/oder um das Datenverarbeitungsmittel bzw. dessen Gehäuse angeordnet sein.

Alternativ oder in Ergänzung können selbstverständlich auch die Erfassungseinrichtung und das Anzeigemittel als eine Einheit ausgeführt sein. Weiterhin können die Erfassungseinrichtung und das Anzeigemittel auch mit der Empfangsanordnung und/oder dem Datenverarbeitungsmittel als eine Einheit ausgebildet sein. Eine Einheit aus Erfassungseinrichtung, Anzeigemittel und Empfangsanordnung, insbesondere auch zusammen mit dem Datenverarbeitungsmittel, können eine überaus kompakte und flexible Gesamtheit bilden, welche von der jeweiligen Person entsprechend mitführbar ist. Dadurch ist es möglich, dass neben der zum Erfassen eines Umgebungsbereiches eingerichtete Erfassungseinrichtung nun auch die zum Empfang von Schallwellen ausgebildete Empfangsanordnung gleichzeitig ausrichtbar sind; insbesondere durch eine einfache Kopfbewegung der Person.

Denkbar ist, dass beispielsweise bei der ersten Begehung einer sich in einem Umgebungsbereich bewegenden Person zunächst nur Daten in Bezug auf empfangene Schallwellen von verschiedenen Orten mit unterschiedlichen Ausrichtungen aufgezeichnet werden, die im Anschluss, beispielsweise während einer zweiten Begehung, mit dann live erfassten Daten zum Umgebungsbereich überlagerbar sind. Natürlich können auch im Rahmen der ersten Begehung gleichzeitig Daten zu empfangenen Schallwellen und dem Umgebungsbereich gesammelt und gespeichert werden, die dann später für eine quasi virtuelle Begehung bzw. Untersuchung eines Objektes zur Verfügung stehen und als Informationen visualisierbar sind.

Besonders bevorzugt kann die Empfangsanordnung wenigstens ein Mittel zum Empfang von Schallwellen aufweisen, bei dem es sich in vorteilhafter Weise um ein Array aus Mikrophonen und/oder eine Messsonde handeln kann. Die Messsonde kann beispielsweise als 3D-Messsonde ausgebildet sein.

Die Erfindung sieht vor, dass das Anzeigemittel einen Bildschirm und/oder eine Projektionseinheit umfassen kann. Bei dem Bildschirm kann es sich beispielsweise um ein Display handeln. Der Bildschirm kann für die ihn zumindest teilweise betrachtende Person der direkten Darstellung einer Information dienen. Demgegenüber kann eine Projektionseinheit eine Abbildung liefern, die dann beispielsweise über eine zumindest teilweise reflektierende Fläche erfassbar ist und/oder direkt auf die Netzhaut der jeweiligen Person trifft. So kann bereits eine einfache Spiegelung der durch das Anzeigemittel zur Verfügung stellbaren Information ausreichen, um der Person eine ausreichende Darstellung zu liefern. Insbesondere in Kombination mit einer zumindest teilweise transparenten Oberfläche für diese Spiegelung kann eine natürliche Überlagerung von Umgebungsbereich und darin eingeblendeter Information erreicht werden.

Denkbar ist auch eine Ausgestaltung des Bildschirms und/oder der Projektionseinheit als eine Einrichtung zur holographischen Darstellung. Diese kann beispielsweise auf Autostereoskopie und einem hierzu ausgebildeten Display basieren. Alternativ oder in Ergänzung kann insbesondere die Projektionseinheit als ein Hologramm Projektor ausgebildet sein oder einen solchen umfassen. Dieser könnte zur 3D-Projektion genutzt werden, so dass ein entsprechendes 3D-Hologramm beispielsweise frei in den Raum projiziert werden könnte. Weiterhin alternativ oder ergänzend kann die Projektionseinheit auch dergestalt sein, dass dessen Darstellung beispielsweise über einen oder zwei Projektoren auf einen Bereich der Tragvorrichtung projiziert wird, wobei die jeweils korrekte Darstellung beispielsweise mittels Eye Tracking erfolgt. Die Erfassung der Augenbewegungen kann dabei beispielsweise mittels einer Infrarotkamera erfolgen.

Als besonders vorteilhafte Ausgestaltung der Tragvorrichtung wird eine solche angesehen, die einer üblichen, vor wenigstens einem Auge der Person tragbaren Form entspricht oder mit dieser korrespondiert. So kann die Tragvorrichtung in bevorzugter Weise als Datenbrille ausgebildet sein oder eine solche umfassen. Eine solche Ausgestaltung erhöht den Tragekomfort und/oder die Akzeptanz sowohl bei der die Tragvorrichtung nutzenden Person als auch in deren Umfeld. Tatsächlich kann eine solche Datenbrille bei Bedarf auch eine individuelle Sehstärke für die jeweilige Person enthalten.

Alternativ oder ergänzend hierzu ist vorgesehen, dass die Tragvorrichtung auch als Helm ausgebildet sein kann oder einen solchen umfasst. Eine derartige Ausgestaltung kann so gleichzeitig etwaige Auflagen aus dem Arbeitsschutz erfüllen. Auch kann eine solche Form dazu genutzt werden, um die den Helm tragende Person gleichzeitig gezielt mit akustischen Eindrücken und/oder Informationen zu versorgen und/oder diese gegenüber äußeren Einflüssen aufgrund von Geräuschen abzuschirmen. Selbstverständlich kann ein solcher Helm mit einem Visier ausgestattet sein oder nicht. Sofern ein Visier vorhanden ist, kann dies beispielsweise direkt als Anzeigemittel dienen oder mit diesem korrespondieren. In jedem Fall kann das Visier dann dazu dienen, die jeweilige/n Information/en der den Helm tragenden Person gegenüber zu visualisieren.

Hinsichtlich der Erfassungseinrichtung wird es als bevorzugt angesehen, wenn diese wenigstens eine Kamera umfasst oder als solche ausgebildet ist. Auf diese Weise kann der jeweilige Umgebungsbereich direkt durch die Erfassungseinrichtung erfasst werden. Hierzu kann die Kamera beispielsweise eine lichtempfindliche und/oder wärmeempfindliche Ausgestaltung aufweisen. Über eine mögliche Restlichtverstärkung können auch schlecht oder gar nicht ausgeleuchtete Umgebungsbereiche sicher erfasst werden. Alternativ oder in Ergänzung hierzu kann die Erfassungseinrichtung wenigstens einen Sensor umfassen oder als ein solcher ausgebildet sein. Ein solcher Sensor ist dann dazu ausgebildet, Distanzen zu messen. Bevorzugt kann der Sensor hierzu die Laufzeit von Licht, beispielsweise eines Licht- oder Laserstrahls messen. Die Zeit zwischen kontrollierter Aussendung und Empfang von durch ein Objekt reflektiertem Licht lässt einen Rückschluss auf die jeweilige Entfernung zwischen der hierzu benötigten Lichtquelle und einer reflektierenden Fläche zu (TOF, "time of flight"). Für eine Reihe von Lichtimpulsen können so auch die jeweils unterschiedlichen Laufzeiten genutzt werden, um 3D-Daten zu generieren. Hierdurch ist es möglich, nicht nur eine einzelne Distanz durch Abtasten zu messen, sondern direkt ganze Bereiche gleichzeitig zu erfassen. Denkbar ist auch der Einsatz von Schall, dessen Laufzeit ebenfalls durch einen Sensor messbar ist. Weiterhin denkbar ist auch die Ausgestaltung eines solchen Sensors zur holographischen Messung. Hierzu kann beispielsweise nacheinander Laserlicht mit unterschiedlichen Wellenlängen genutzt werden, um im Rahmen der Auswertung der Reflektionen eine überaus schnelle Erfassung eines Umgebungsbereichs zu erhalten.

Je nach Ausgestaltung des erfindungsgemäßen Schallquellen-Visualisierungssystems ist es möglich, die zum Empfang einer Schallwelle eingerichtete Empfangsanordnung zumindest teilweise in oder an der Tragvorrichtung anzuordnen. Dadurch ist es möglich, dass die zum Erfassen eines Umgebungsbereiches eingerichtete und ebenfalls in oder an der Tragvorrichtung angeordnete Erfassungseinrichtung gleichzeitig mit der zum Empfang von Schallwellen ausgebildeten Empfangsanordnung ausrichtbar ist; insbesondere durch eine einfache Kopfbewegung der Person.

Das nunmehr vorgestellte erfindungsgemäße Schallquellen-Visualisierungssystems weist überaus vorteilhafte Eigenschaften auf, die sich insbesondere aus der Anordnung der Erfassungseinrichtung in oder an der Tragvorrichtung ergeben. Da diese Ausgestaltung ohne die Notwendigkeit zur Bewegung und/oder Ausrichtung aller zu einer Gesamtheit verbundenen Teile des Schallquellen-Visualisierungssystems auskommt, erlaubt dieses einen insgesamt dynamischen Einsatz. So reicht bereits eine natürliche Kopfbewegung einer die Tragvorrichtung nutzenden Person, um die Erfassungseinrichtung in gewünschter Weise gegenüber dem zu erfassenden Umgebungsbereich auszurichten. Gleichzeitig stehen der Person relevante Informationen in Bezug auf die Analyse von über die Empfangsanordnung empfangenen Schallwellen zur Verfügung, die so stets in deren Sichtbereich durch das Anzeigemittel visualisierbar sind. Insbesondere durch eine mögliche Überlagerung des realen und/oder auf Basis erfasster 3D-Daten virtuell dargestellten Umgebungsbereichs mit an diesen angepassten Informationen ergibt sich eine logische und überaus vorteilhafte Verknüpfung für die jeweilige Person, insbesondere in Echtzeit. Das System ermöglicht selbstverständlich auch eine vollständig virtuelle Nutzung, bei der die hierfür relevanten Daten beispielsweise im Vorfeld mittels entsprechender Erfassung und/oder Empfangs gesammelt und gespeichert wurde. Damit ist es auch im Nachgang auf Basis der Daten möglich, ein Objekt virtuell zu untersuchen, beispielsweise an einem anderen Ort.

Durch die Anordnung der Erfassungseinrichtung im Kopfbereich sind überaus natürliche Bewegungen möglich, an welche insbesondere die Visualisierung der Informationen beispielsweise in Echtzeit anpassbar ist. Durch die so an menschliche Bewegungsabläufe anpassbare Visualisierung der jeweiligen Information wird eine hohe Akzeptanz und/oder Dynamik erreicht, die einen effektiven Einsatz des erfindungsgemäßen Systems ermöglicht.

Je nach Art und Komplexität des Umgebungsbereichs sowie der Schallwelle/n ist es möglich, die jeweilige Schallquelle/n zu visualisieren und/oder Informationen hierüber zu erhalten. Insbesondere bei durch Superposition von einer oder mehreren Quellen direkt abgestrahlten und/oder an Oberflächen reflektierten Schallwellen können sich komplexe Schallfelder ergeben, die mit Hilfe des Schallquellen-Visualisierungssystems sehr genau untersucht werden können. Insbesondere die permanente Ausrichtung der über die Tragvorrichtung an die Kopfbewegungen und den jeweiligen Ort der das System nutzenden Person gebundene Erfassungseinrichtung stellt völlig neue Arten der Visualisierung zur Verfügung, die stets an sich verändernde Blickwinkel und Entfernungen anpassbar ist.

Hiermit durchführbare Messungen könnten beispielsweise auf Beamforming und/oder verwandten Verfahren basieren, bei denen für eine Vielzahl von Punkten im Raum abgeschätzt wird, wie stark die Schallabstrahlung von diesen ist. Die Analyseergebnisse könnten dann beispielsweise in Form von Falschfarbenbildern (Falschfarbplot) und/oder farbiges Gitter und/oder farbige Punkt-Wolken dargestellt werden. Dabei könnten mit einem Mikrofonarray der Empfangsanordnung Schallwellen gemessen werden, um darauf basierend zunächst festzulegen, für welche Punkte des Umgebungsbereichs etwaige Ergebnisse abgeschätzt werden sollten. Bei dem Ergebnis der Analyse bzw. Berechnung könnte es sich dann um Werte handeln, die beispielsweise die Stärke einer Schallabstrahlung von den Punkten wiedergeben.

Weiterhin denkbar wäre beispielsweise auch der Einsatz für eine Dekonvolution. Bei diesem Verfahren könnte das System dazu genutzt werden, die jeweilige Schallquelle/n als Verursacher von Schallwellen zu ermitteln. Das entsprechende Ergebnis könnte dann in Form von Quellenort/en und/oder - stärke/n visualisiert werden. Dies könnte beispielsweise durch Farbe und/oder Größe eines oder mehrerer Punkte erfolgen. Die erforderliche Messung könnte dabei ebenfalls durch ein Mikrofonarray der Empfangsanordnung erfolgen, woraufhin der/die Ort/e der Schallquelle/n berechnet bzw. abgeschätzt wird/werden. Denkbar ist, dass hierzu mögliche Orte vorgegeben werden können.

Eine weitere Möglichkeit zum Einsatz der erfindungsgemäßen Systems liegt in der möglichen Messung der Intensität einer Schallwelle. Hierzu könnte die Empfangsanordnung mit einer 3D-Messsonde aus mehreren Mikrofonen ausgestattet sein. Dabei könnte beispielsweise zu einem Zeitpunkt immer nur an einem Punkt im Raum des Umgebungsbereiches ein Schallintensitätsvektor bestimmt werden. Durch eine Bewegung der Empfangsanordnung im Raum bzw. um den Umgebungsbereich herum könnten so nach und nach mehrere Punkte in Bezug auf Schallwellen gemessen und die Ergebnisse beispielsweise als Vektoren verschiedener Länge und/oder Farbe visualisiert werden. Für ein derartiges Verfahren würde sich der Einsatz einer Sonde mehr als ein Array für die erforderlichen Messungen eignen. Eine derartige Sonde kann beispielsweise mehrere Mikrofone umfassen. Selbstverständlich sind hierzu auch Ausgestaltungen in Form eines Sensors denkbar, wie etwa einer zur Messung der Schallschnelle. Im Rahmen dieses Verfahrens könnte eine Schallfeldgröße an einem Messort entweder direkt gemessen oder aus dort zuvor gemessenen Größen berechnet werden, so dass keine weiteren Ergebnisse für andere als diese Messorte berechnet würden, wie bei den zuvor genannten Verfahren üblich.

### KURZBESCHREIBUNG DER ZEICHNUNGSABBILDUNG

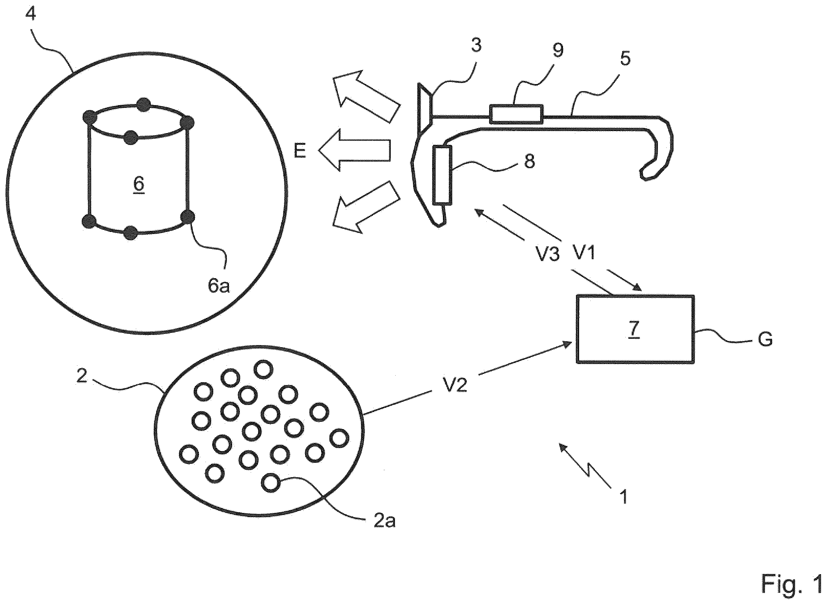

Die Erfindung wird anhand von Fig. 1 im folgenden noch näher erläutert:
Fig. 1 - zeigt die schematische Darstellung eines erfindungsgemäßen Schallquellen-Visualisierungssystems.

### BESTER WEG ZUR AUSFÜHRUNG DER ERFINDUNG

Fig. 1 ist die schematische Darstellung eines erfindungsgemäßen Schallquellen-Visualisierungssystems 1 zu entnehmen. Das System 1 umfasst eine Empfangsanordnung 2, die zum Empfang von Schallwellen eingerichtet ist. Vorliegend weist die Empfangsanordnung 2 ein Array aus Mikrofonen 2a auf. Weiterhin umfasst das System 1 eine Erfassungseinrichtung 3, die dazu ausgebildet ist, einen Umgebungsbereich 4 zu erfassen. Hierzu kann die Erfassungseinrichtung 3 beispielsweise als Kamera ausgebildet sein oder eine solche umfassen. Die Erfassungseinrichtung 3 ist an einer Tragvorrichtung 5 angeordnet, die in dem hier gezeigten Beispiel die Form einer Brille aufweist. Hierdurch ist es möglich, die Tragvorrichtung 5 mitsamt der daran angeordneten Erfassungseinrichtung 3 mit einem Kopfbereich einer hier nicht weiter dargestellten Person zu koppeln. Auf diese Weise ist die Erfassungseinrichtung 3 stets in Abhängigkeit der jeweiligen Kopfbewegung der Person in Bezug auf den Umgebungsbereich 4 ausrichtbar. Einen weiteren Bestandteil des Systems 1 bildet ein Datenverarbeitungsmittel 7, welches über geeignete Verbindungen V1-V3 sowohl mit der Empfangsanordnung 2 als auch mit der Erfassungseinrichtung 3 signalübertragend gekoppelt ist. Letztlich beinhaltet das System 1 auch ein Anzeigemittel 8. Das Anzeigemittel 8 ist in diesem Beispiel derart an der Tragvorrichtung 5 angeordnet, dass eine über das Anzeigemittel 8 mögliche Visualisierung im Sichtbereich der die Tragvorrichtung 5 nutzenden Person liegt.

Im Umgebungsbereich 4 ist ein Objekt 6 zu erkennen, das vorliegend die beispielhafte Form eines Zylinders aufweist. Das Objekt 6 besitzt wenigstens eine Schallquelle 6a, von der mindestens eine nicht näher dargestellte Schallwelle ausgeht.

Im Einsatz des Schallquellen-Visualisierungssystems 1 erfolgt eine Erfassung E des Umgebungsbereichs 4 durch die Erfassungseinrichtung 3. Die so erfassten 3D-Daten werden über die Verbindung V1 am das Datenverarbeitungsmittel 7 geleitet. Zuvor oder gleichzeitig wird die von der Schallquelle 6a des Objekts 6 ausgehende Schallwelle von der Empfangsanordnung 2 empfangen, woraufhin entsprechende Daten hierüber über die Verbindung V2 an das Datenverarbeitungsmittel 7 geleitet werden. Das Datenverarbeitungsmittel 7 nimmt daraufhin eine Analyse G der Daten über die Schallwelle in Kenntnis der durch die Erfassungseinrichtung 3 übermittelten 3D-Daten bzw. -Koordinaten vor. Anschließend wird das jeweilige Analyseergebnis über die Verbindung V3 an das Anzeigemittel 8 übertragen, welches diese in Form von für die Person sichtbaren Informationen visualisiert. Vorliegend weist die Tragvorrichtung 5 zudem einen Speicher 9 auf, welcher der zumindest temporären oder auch dauerhaften Speicherung etwaiger Daten dient. Unabhängig davon, ob das Datenverarbeitungsmittel 7 ebenfalls an der Tragvorrichtung 5 angeordnet sein kann oder nicht, können Daten so verarbeitet sowie gespeichert und bei Bedarf auch manipuliert werden.

## Patentansprüche

1. Schallquellen-Visualisierungssystem, umfassend eine zum Empfang von Schallwellen eingerichtete Empfangsanordnung (2) sowie eine zur Erfassung eines Umgebungsbereichs (4) ausgebildete Erfassungseinrichtung (3), ein Datenverarbeitungsmittel (7), ein Anzeigemittel (8), und eine mit einem Kopfbereich einer das Schallquellen-Visualisierungssystem bedienenden Person koppelbare Tragvorrichtung (5), wobei die Empfangsanordnung (2) und die Erfassungseinrichtung (3) mit dem Datenverarbeitungsmittel (7) derart signalübertragend gekoppelt sind, dass eine innerhalb eines erfassten Umgebungsbereichs (4) empfangene Schallwelle auswertbar und das ausgewertete Ergebnis in Form wenigstens einer Information über die empfangene Schallwelle durch das Anzeigemittel (8) visualisierbar ist, wobei die Erfassungseinrichtung (3) in oder an der Tragvorrichtung (5) angeordnet oder als solche ausgebildet ist,
**dadurch gekennzeichnet,**
**dass** die Tragvorrichtung (5) zumindest bereichsweise transparent oder blickdicht ausgebildet ist, wobei das Anzeigemittel (8) dazu eingerichtet ist, den Ort einer Schallquelle (6a) als Einblendung in den zumindest teilweise durch die Tragvorrichtung (5) hindurch frei sichtbaren oder in dem von der Erfassungseinrichtung (3) erfassten Umgebungsbereich (4) zu visualisieren.

2. Schallquellen-Visualisierungssystem nach Anspruch 1,
**gekennzeichnet durch**
eine Anordnung des Anzeigemittels (8) an der Tragvorrichtung (5) derart, dass das Anzeigemittel (8) und/oder dessen Visualisierung zumindest teilweise im Sichtbereich einer die Tragvorrichtung (5) in bestimmungsgemäßer Weise nutzenden Person gelegen ist.

3. Schallquellen-Visualisierungssystem nach Anspruch 2,
**dadurch gekennzeichnet,**
**dass** die Tragvorrichtung (5) zumindest bereichsweise transparent ausgebildet ist, wobei das Anzeigemittel (8) dazu eingerichtet ist, die Information über die empfangene Schallwelle als Einblendung in den zumindest teilweise durch die Tragvorrichtung (5) hindurch frei sichtbaren Umgebungsbereich (4) zu visualisieren.

4. Schallquellen-Visualisierungssystem nach Anspruch 2,
**dadurch gekennzeichnet,**
**dass** die Tragvorrichtung (5) zumindest bereichsweise blickdicht ausgebildet ist, wobei das Anzeigemittel (8) dazu eingerichtet ist, den von der Erfassungseinrichtung (3) erfassten Umgebungsbereich (4) zumindest teilweise zusammen mit der darin eingeblendeten Information über die empfangene Schallwelle zu visualisieren.

5. Schallquellen-Visualisierungssystem nach einem der vorherigen Ansprüche,
**dadurch gekennzeichnet,**
**dass** die Information über die empfangene Schallwelle auf Basis einer Echtzeitermittlung oder einer vorherigen Ablage des ausgewerteten Ergebnisses in einem Speicher visualisierbar ist.

6. Schallquellen-Visualisierungssystem nach einem der vorhergehenden Ansprüche,
**dadurch gekennzeichnet,**
**dass** die Information über die empfangene Schallwelle in einer Überlagerung mit einer zuvor in einem Speicher aufgezeichneten oder mit einer in Echtzeit ablaufenden Wiedergabe eines Umgebungsbereichs visualisierbar ist.

7. Schallquellen-Visualisierungssystem nach einem der vorherigen Ansprüche,
**dadurch gekennzeichnet,**
**dass** auf Basis einer Erfassung durch die Erfassungseinrichtung (3) 3D-Daten eines Umgebungsbereichs (4) ermittelbar sind, wobei die Information über die empfangene Schallwelle als an die 3D-Daten angepasste, insbesondere räumliche, Darstellung visualisierbar ist.

8. Schallquellen-Visualisierungssystem nach einem der vorherigen Ansprüche,
**dadurch gekennzeichnet,**
**dass** der erfasste Umgebungsbereich (4) und/oder die Information über die empfangene Schallwelle als 2D- oder 3D-Darstellung visualisierbar sind/ist.

9. Schallquellen-Visualisierungssystem nach einem der vorherigen Ansprüche,
**dadurch gekennzeichnet,**
**dass** die visualisierbare Information wenigstens eines der nachfolgenden Analyseergebnisse in Bezug auf mindestens eine empfangene Schallwelle enthält:
- Schalldruck,
- Schallschnelle,
- Schallintensität,
- Schallpegel,
- Frequenz, Lage innerhalb des erfassten Umgebungsbereichs (4) .

10. Schallquellen-Visualisierungssystem nach einem der vorherigen Ansprüche,
**dadurch gekennzeichnet,**
**dass** in oder an der Tragvorrichtung (5) wenigstens ein Speicher (9) und/oder mindestens ein Datenverarbeitungsmittel (7) angeordnet sind/ist.

11. Schallquellen-Visualisierungssystem nach einem der vorherigen Ansprüche,
**dadurch gekennzeichnet,**
**dass** das Datenverarbeitungsmittel (7) und die Empfangsanordnung (2) als eine Einheit ausgeführt sind.

12. Schallquellen-Visualisierungssystem nach einem der vorherigen Ansprüche,
**dadurch gekennzeichnet,**
**dass** die Erfassungseinrichtung (3) und das Anzeigemittel (8) als eine Einheit ausgeführt sind.

13. Schallquellen-Visualisierungssystem nach einem der vorherigen Ansprüche,
**dadurch gekennzeichnet,**
**dass** die Erfassungseinrichtung (3) und das Anzeigemittel (8) sowie die Empfangsanordnung (2) und/oder das Datenverarbeitungsmittel (7) als eine Einheit ausgeführt sind.

14. Schallquellen-Visualisierungssystem nach einem der vorherigen Ansprüche,
**dadurch gekennzeichnet,**
**dass** die Empfangsanordnung (2) ein Array aus Mikrofonen (2a) oder eine Messsonde, insbesondere 3D-Messsonde, umfasst.

15. Schallquellen-Visualisierungssystem nach einem der vorherigen Ansprüche,
**dadurch gekennzeichnet,**
**dass** die Empfangsanordnung (2) zumindest teilweise in oder an der Tragvorrichtung (5) angeordnet ist.

## Claims

1. Sound source visualisation system, comprising a receiver arrangement (2) set up to receive sound waves, as well as a capture unit (3) configured to capture a surrounding area (4), a data processing means (7), a display means (8), and a carrying device (3) which can be coupled to a head area of a person operating the sound source visualisation system, wherein the receiver arrangement (2) and the capture unit (3) are coupled in a signal-transmitting manner to the data processing means (7) so that a sound wave received within a captured surrounding area (4) can be evaluated and the evaluated result can be visualised by the display means (8) in the form of at least information about the received sound wave, wherein the capture unit (3) is arranged in or on, or is configured as, the carrying device (5),
**characterised in**
**that** the carrying device (5) is configured transparent or opaque at least in some areas wherein the display means (8) is set up to visualise the site of a sound source (6a) as overlay in the surrounding area (4) which is freely visible at least partly through the carrying device (5) or in the surrounding area (4) captured by the capture device (3).

2. Sound source visualisation system according to claim 1,
**characterised by**
an arrangement of the display means (8) on the carrying device (5) so that the display means (8) and/or its visualisation is placed at least in part in the sight region of a person using the carrying device (5) in the proper designated manner.

3. Sound source visualisation system according to claim 2,
**characterised in**
**that** the carrying device (5) is designed transparent in at least some areas wherein the display means (8) is set up to visualise the information about the received sound wave as overlay in the surrounding area (4) which is freely visible at least partly through the carrying device (5).

4. Sound source visualisation system according to claim 2,
**characterised in**
**that** the carrying device (5) is formed opaque at least in some areas wherein the display means (8) is set up to visualise the surrounding area (4) captured by the capture unit (3) at least partly together with the information on the received sound wave overlaid therein.

5. Sound source visualisation system according to one of the preceding claims,
**characterised in**
**that** the information on the received sound wave can be visualised on the basis of real time evaluation or a previous filing of the evaluated result in a storage unit.

6. Sound source visualisation system according to one of the preceding claims,
**characterised in**
**that** the information on the received sound wave can be visualised superimposed with a replay of a surrounding area previously recorded in a storage unit or running in real time.

7. Sound source visualisation system according to one of the preceding claims,
**characterised in**
**that** 3D data of a surrounding area (4) can be calculated on the basis of a capture by the capture unit (3) wherein the information on the received sound wave can be visualised as a, in particular spatial, representation adapted to the 3D data.

8. Sound source visualisation system according to one of the preceding claims,
**characterised in**
**that** the captured surrounding area (4) and/or the information on the received sound wave can be visualised as a 2D or 3D representation.

9. Sound source visualisation system according to one of the preceding claims,
**characterised in,**
**that** the information which can be visualised contains at least one of the following analysis results in relation to at least one received sound wave:
- sound pressure,
- sound speed,
- sound intensity,
- sound level,
- frequency, position inside the captured surrounding area (4).

10. Sound source visualisation system according to one of the preceding claims,
**characterised in**
**that** at least one storage unit (9) and/or at least one data processing means (7) is/are arranged in or on the carrying device (5).

11. Sound source visualisation system according to one of the preceding claims,
**characterised in**
**that** the data processing means (7) and the receiver arrangement (2) are configured as one unit.

12. Sound source visualisation system according to one of the preceding claims,
**characterised in**
**that** the capture device (3) and the display means (8) are configured as one unit.

13. Sound source visualisation system according to one of the preceding claims,
**characterised in**
**that** the capture unit (3) and the display means (8) as well as the receiver arrangement (2) and/or the data processing means (7) are configured as one unit.

14. Sound source visualisation system according to one of the preceding claims,
**characterised in**
**that** the receiver arrangement (2) comprises an array of microphones (2a) or a measuring probe, in particular a 3D measuring probe.

15. Sound source visualisation system according to one of the preceding claims,
**characterised in**
**that** the receiver arrangement (2) is arranged at least in part in or on the carrying device (5).

## Revendications

1. Système de visualisation de sources sonores, comportant un dispositif de réception (2), conçu pour la réception des ondes sonores, ainsi qu'un moyen de détection (3), adapté pour la détection d'une zone environnante (4), un moyen de traitement de données (7), un moyen d'affichage (8), et un dispositif de support (5), qui peut être couplé à une partie de la tête d'une personne, qui commande le système de visualisation de sources sonores, dans lequel le dispositif de réception (2) et le moyen de détection (3) sont couplés de façon à transmettre le signal avec le moyen de traitement de données (7) en sorte qu'une onde sonore reçue dans une zone environnante (4) détectée peut être évaluée, et le résultat évaluée est visualisable par le moyen d'affichage (8) sous forme d'au moins une information sur l'onde sonore reçue, dans lequel le moyen de détection (3) est agencé dans ou sur le dispositif de support (5), ou est formé comme tel,
**caractérisé en ce**
**que** le dispositif de support (5), au moins par endroits, est formé de manière transparente ou opaque, dans lequel le moyen d'affichage (8) est conçu pour visualiser l'endroit d'une source sonore (6a) comme insertion dans la zone environnante (4) librement visible au moins partiellement à travers le dispositif de support (5) ou détectée par le moyen de détection (3).

2. Système de visualisation de sources sonores selon la revendication 1,
**caractérisé par**
un agencement du moyen d'affichage (8) au dispositif de support (5) de telle manière que le moyen d'affichage (8) et/ou son visualisation se trouve au moins partiellement dans le champ de vision d'une personne utilisant le dispositif de support (5) de la manière prévue.

3. Système de visualisation de sources sonores selon la revendication 2,
**caractérisé en ce**
**que** le dispositif de support (5) est transparent au moins par endroits, dans lequel le moyen d'affichage (8) est conçu pour visualiser l'information sur l'onde sonore reçue comme insertion dans la zone environnante (4) librement visible au moins partiellement à travers le dispositif de support (5) .

4. Système de visualisation de sources sonores selon la revendication 2,
**caractérisé en ce**
**que** le dispositif de support (5) est opaque au moins par endroits, dans lequel le moyen d'affichage (8) est conçu pour visualiser la zone environnante (4) détectée par le moyen de détection (3) au moins partiellement ensemble avec l'information insérée dedans sur l'onde sonore reçue.

5. Système de visualisation de sources sonores selon l'une quelconque des revendications précédentes,
**caractérisé en ce**
**que** l'information sur l'onde sonore reçue est visualisable sur la base d'une détermination en temps réel ou d'un stockage précédent du résultat évalué dans une mémoire.

6. Système de visualisation de sources sonores selon l'une quelconque des revendications précédentes,
**caractérisé en ce**
**que** l'information sur l'onde sonore reçue est visualisable dans une superposition avec une reproduction d'une zone environnante enregistrée auparavant dans une mémoire ou se déroulant en temps réel.

7. Système de visualisation de sources sonores selon l'une quelconque des revendications précédentes,
**caractérisé en ce**
**que** sur la base d'une détection par le moyen de détection (3) des données 3D d'une zone environnante (4) peuvent être déterminées, dans lequel l'information sur l'onde sonore reçue est visualisable comme une représentation surtout spatiale adaptée aux données 3D.

8. Système de visualisation de sources sonores selon l'une quelconque des revendications précédentes,
**caractérisé en ce**
**que** la zone environnante (4) détectée et/ou l'information sur l'onde sonore reçue est / sont visualisable(s) comme représentation 2D ou 3D.

9. Système de visualisation de sources sonores selon l'une quelconque des revendications précédentes,
**caractérisé en ce**
**que** l'information visualisable comporte au moins un des résultats d'analyes suivants par rapport à au moins une onde sonore reçue :
- pression sonore,
- vitesse acoustique,
- intensité sonore,
- niveau sonore,
- fréquence, position dans la zone environnante (4) détectée.

10. Système de visualisation de sources sonores selon l'une quelconque des revendications précédentes,
**caractérisé en ce**
**que** dans ou sur le dispositif de support (5) au moins une mémoire (9) et/ou au moins un moyen de traitement de données (7) est/sont agencé(s).

11. Système de visualisation de sources sonores selon l'une quelconque des revendications précédentes
**caractérisé en ce**
**que** le moyen de traitement de données (7) et le dispositif de réception (2) sont réalisés comme une unité.

12. Système de visualisation de sources sonores selon l'une quelconque des revendications précédentes,
**caractérisé en ce**
**que** le moyen de détection (3) et le moyen d'affichage (8) sont réalisés comme une unité.

13. Système de visualisation de sources sonores selon l'une quelconque des revendications précédentes,
**caractérisé en ce**
**que** le moyen de détection (3) et le moyen d'affichage (8) ainsi que le dispositif de réception (2) et/ou le moyen de traitement de données (7) sont réalisés comme une unité.

14. Système de visualisation de sources sonores selon l'une quelconque des revendications précédentes,
**caractérisé en ce**
**que** le dispositif de réception (2) comporte un ensemble de microphones (2a) ou une sonde de mesure, surtout une sonde de mesure 3D.

15. Système de visualisation de sources sonores selon l'une quelconque des revendications précédentes,
**caractérisé en ce**
**que** le dispositif de réception (2) est agencé au moins partiellement dans ou sur le dispositif de support (5).
